# EUROPEAN PATENT APPLICATION

(11) **EP 4 810 211 A1**
(43) Date of publication of application: **23.09.2026**
(21) Application number: 26165262.2
(22) Date of filing: 17.03.2026
(51) Int. Cl.: B25J 15/00, B25J 15/02, B25J 13/08, B25J 19/02

(54) **GRIPPING SYSTEM**

(30) Priority: 17.03.2025 US 202519081777
(71) Applicant: Google LLC, Mountain View, CA 94043 (US)
(72) Inventor: Tokarczyk, Zack, Mountain View, California, 94043 (US); Worden, Nathanael Arling, Mountain View, California, 94043 (US); Schiller, Ryan, Mountain View, California, 94043 (US)
(74) Representative: Betten & Resch

(57) **Abstract**

The technology is generally directed to a gripping system for receiving hard drives of varying thicknesses and located in any position or orientation. The gripping system may include two arms to grip a hard drive and at least one belt positioned along a length of each arm to move the hard drive towards or away from the system. The arms may be pivotally attached so that hard drives of varying widths can be received between the arms. The belts may provide improved control of the hard drive once received between the arms because a force exerted by the belts may secure the hard drive in place to prevent the hard drive from drooping or moving out of place.

## Description

### BACKGROUND

Hard drives in shippable packaging are difficult to retrieve with conventional gripping systems because hard drive features vary widely across manufactures. For example, the length of hard drives varies widely because this feature is not fully controlled by industry standards, as only a maximum length is established. When handling hard drives, conventional gripping systems typically can only grasp a portion of each hard drive because hard drives are often only partially exposed in packaging and are thus in unpredictable positions and orientations. Additionally, conventional grippers do not properly secure hard drives because quick movements can result in the hard drive drooping within the gripper. Therefore, conventional gripping systems are unreliable for gripping and securing hard drives.

### BRIEF SUMMARY

The technology is generally directed to a gripping system for receiving hard drives of varying thicknesses and located in any position or orientation. The gripping system may include two arms to grip a hard drive and at least one belt positioned along a length of each arm to move the hard drive towards or away from the system. The arms may be pivotally attached so that hard drives of varying widths can be received between the arms. The belts may provide improved control of the hard drive once received between the arms because a force exerted by the belts may secure the hard drive in place to prevent the hard drive from drooping or moving out of place.

In one aspect, a gripping system may include two arms opposing each other, and each arm may have a length elongated in a longitudinal direction and defining a receiving space to receive a hard drive. Each arm may also have a top end and a bottom end such that a top midpoint between the top ends of the arms and a bottom midpoint between the bottom ends of the arms define a gripping axis. Each arm may also include a front portion and a back portion opposing each other such that a front internal surface of the front portion faces a back internal surface of the back portion and creating a channel between the front internal surface and the back internal surface. Each channel may receive the hard drive between the arms along the gripping axis. The two arms may be coupled to each other by the top end and may be free at the bottom end. The gripping system may also include at least one belt along a length of each arm and positioned between the front and back portions of each arm. Each of the at least one belt may be between each front and back portion.

In some aspects, the arms may be pivotally connected to a main bracket. In some aspects, the gripping system may include a multi physics box sensor connected to the main bracket. The multi physics box sensor may measure a condition of the system and compare that measured condition to a predetermined value of that condition. The condition may be at least one of a vibration, a shock, or a temperature.

In some aspects, the gripping system may include a spring between the top ends of the arms. The spring may bend when the arms pivot outward to receive a hard drive. When the arms pivot outward, the top midpoint may be closer to the top ends than the bottom midpoint is from the bottom ends.

In some aspects, the gripping system may include at least one moving portion connected to the main bracket The at least one moving portion may move the arms along or about at least one moving axis. In some aspects, the at least one moving portion may be a first moving portion connected to the arms and pivotally connected to a second moving portion so that movement of the first moving portion relative to the second moving portion and about a first axis causes the arms to rotate about the first axis. In some aspects, the second moving portion may be pivotally connected to a third moving portion so that movement of the second moving portion relative to the third moving portion and about a second axis causes the arms to rotate about the second axis, the second axis being transverse to the first axis. In some aspects, the third moving portion may be pivotally connected to a base of the system so that movement of the third moving portion relative to the base and about a third axis causes the arms to rotate about the third axis. The third axis may be transverse to the first and second axes.

In some aspects, the gripping system may include one or more processors, which may detect a position and orientation of the hard drive. The one or more processors may also move, by one or more moving portions based on the position and orientation of the hard drive, the arms along or about the at least one moving axis until the arms may be in a receiving position and orientation that can receive the hard drive in the receiving space between the arms. The one or more processors may translate, by the at least one belt on each arm, the hard drive along the gripping axis in a receiving direction towards the top end of the arms.

In some aspects, the gripping system may include a camera. In detecting the position and orientation of the hard drive, the one or more processors may detect, by moving the camera along or about the at least one moving axis, the position and orientation of the hard drive.

In some aspects, the gripping system may include a sensor positioned within the receiving space. The sensor may detect when the hard drive is fully engaged within the receiving space. When the hard drive is fully engaged within the receiving space, a distance between a top edge of the hard drive and the bottom end of the arms may be larger than a distance between a bottom edge of the hard drive and the bottom end of the arms.

In some aspects, the one or more processors may translate, by the at least one belt on each arm, the hard drive along the gripping axis in a releasing direction towards the bottom end of the arms.

In some aspects, the at least one belt is at least one O-ring.

In some aspects, the gripping system may include a camera positioned along the gripping axis. The camera may detect the hard drive.

In some aspects, the gripping system may include a laser distance sensor within the receiving space. The laser distance sensor may measure a distance from the laser distance sensor to a top edge of the hard drive.

In some aspects, the gripping system may include at least one motor. In some aspects, the gripping system may include a current monitoring sensor on the at least one motor. The current monitoring sensor may detect when the hard drive has reached an end stop. In some aspects, the at least one motor may be at least one of a stepper motor, a brushless DC motor, or a brushed DC motor.

In another aspect, a method of gripping a hard drive may include detecting a position and orientation of a hard drive. The method may also include moving, by one or more moving portions based on the position and orientation of the hard drive, two opposing arms along or about at least one moving axis until the arms are in a receiving position and orientation to receive the hard drive in a receiving space between the arms. The method may also include translating, by at least one belt along a length of each arm, the hard drive along a gripping axis in a receiving direction towards a top end of the arms. Each of the at least one belt may be positioned traverse to two internal surfaces of each arm so as to define a channel on each arm for engaging the hard drive.

In some aspects, the method may also include moving a camera along or about the moving axis to detect the position and orientation of the hard drive.

### BRIEF DESCRIPTION OF THE DRAWINGS

FIG. 1 is a front perspective view of an example gripping system, according to aspects of the disclosure.
FIG. 2A is a front perspective view of a portion of the gripping system in FIG. 1.
FIG. 2B is a back perspective view of the portion of the gripping system in FIG. 2A.
FIG. 2C is a side view of the portion of the gripping system of FIG. 2A.
FIG. 2D is a top view of the portion of the gripping system in FIG. 2A.
FIG. 3 is perspective view a second arm of the gripping system of FIG. 1.
FIG. 4 is an exploded perspective view of a first arm on the gripping system of FIG. 1.
FIG. 5A is a side view of the first arm and the second arm of the gripping system of FIG. 1 in an unengaged position.
FIG. 5B is a side view the first arm and the second arm of FIG. 5A in an engaged and closed position.
FIG. 5C is a side view the first arm and the second arm of FIG. 5A in an engaged and open position.
FIG. 6 is a perspective view of a main bracket on the gripping system of FIG. 1.
FIG. 7 is an exploded view of the portion of the gripping system in FIG. 2A.
FIG. 8A is a side view of the portion of the gripping system in FIG. 2A initially engaging a hard drive.
FIG. 8B is a side view of the portion of the gripping system in FIG. 2A fully receiving a hard drive.
FIG. 9 is a flow diagram of an example method for lifting a hard drive, according to aspects of the disclosure.
FIG. 10 is a block diagram of an example system for lifting a hard drive, according to aspects of the disclosure.

### DETAILED DESCRIPTION

The technology is generally directed to a gripping system for receiving hard drives of varying thicknesses and located in any position or orientation. The gripping system may include two arms to grip a hard drive and at least one belt positioned along a length of each arm to move the hard drive towards or away from the system. The arms may be pivotally attached so that hard drives of varying widths can be received between the arms. The belts may provide improved control of the hard drive once received between the arms because a force exerted by the belts may secure the hard drive in place to prevent the hard drive from drooping or moving out of place. To detect a position and orientation of a hard drive for gripping, the gripping system may include a camera and/or one or more sensors. To identify a hard drive, the gripping system may include a barcode scanner. The gripping system may be robotic. The gripping system may be stationary or a mobile robot. Though the gripping system is described with respect to gripping hard drives, the gripping system can also be used to grip any of a variety of other objects, whether in a datacenter or computing environment or in any other environment.

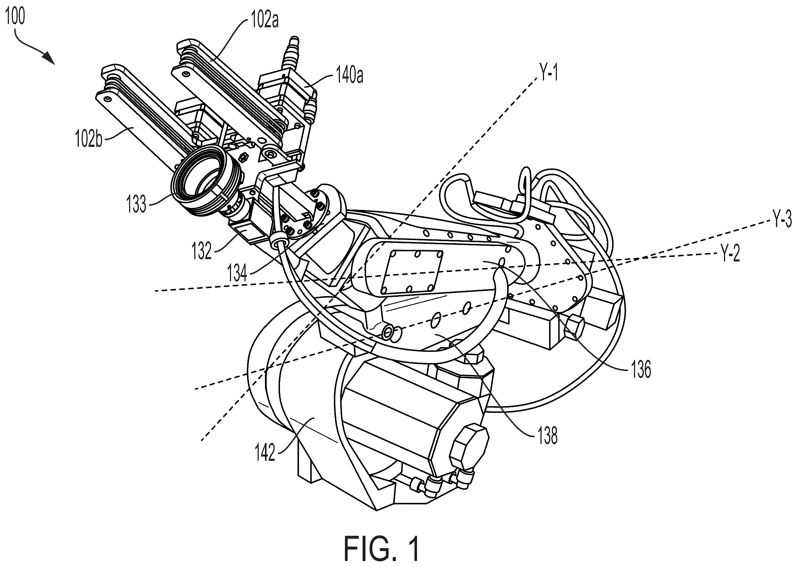

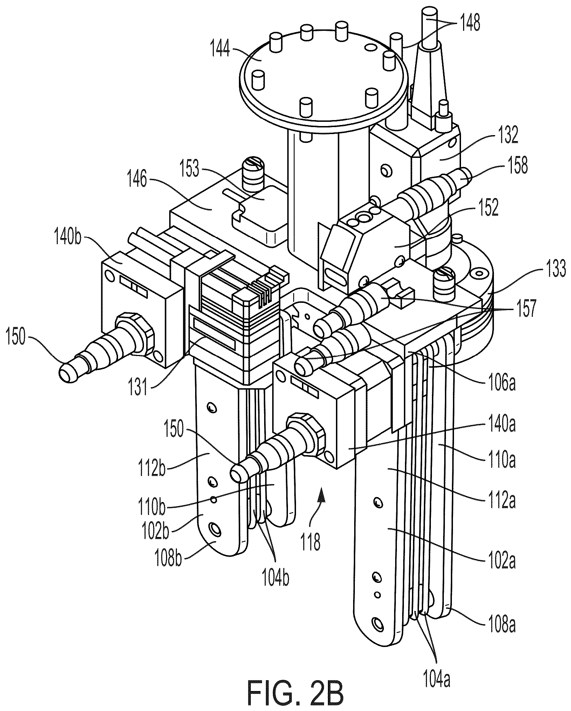

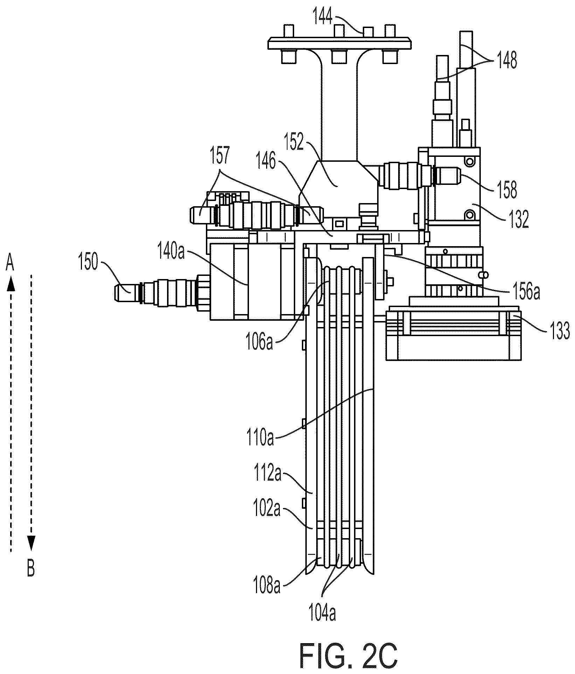

FIG. 1 illustrates an example gripping system 100. The gripping system 100 may include two arms 102a, 102b to grip a hard drive, such as hard drive 154. The gripping system 100 may also include belts 104a, 104b positioned along a length of each arm 102a, 102b to move a hard drive towards or away from the gripping system 100. The gripping system 100 may detect a position and orientation of a hard drive using a camera 132 and/or one or more sensors 152 and 153, as described further in connection with FIG. 2C. The gripping system 100 may identify a hard drive with a barcode scanner 131, as described further in connection with FIG. 2B. The belts 104a, 104b may be moved in two directions along the length of the arms 102a, 102b through motors 140a and 104b that engage with the arms 102a, 102b, as described further in connection with FIG. 2C.

The position and orientation of the arms 102a, 102b may be adjusted by a first moving portion 134, a second moving portion 136, and a third moving portion 138. The first moving portion 134 may be a substantially square structure, and the second and third moving portions 136, 138 may each be a longitudinal structure. The first, second, and third moving portions 134, 136, 138 may be pivotally connected to each other so as to each rotate the arms 102a, 102b about an independent axis. Specifically, the first moving portion 134 may be connected to the arms 102a, 102b at one end and connected to the second moving portion 136 at its opposing end. The second moving portion 136 may be connected to the third moving portion 138 at its opposing end. The first moving portion 134 may rotate the arms 102a, 102b about axis Y-1, the second moving portion 136 may rotate the arms 102a, 102b about axis Y-2, and third moving portion 138 may rotate the arms 102a, 102b about axis Y-3. Axes Y-1, Y-2, and Y-3 may be transverse to each other. Though the second and third moving portions 136, 138 are illustrated as being substantially the same length, the lengths may differ in other examples.

While three moving portions are illustrated in the example of Fig. 1, there may be any number of moving portions, each being of any length. Additionally, in other aspects, one or more moving portions may translate the arms 102a, 102b along an axis.

The third moving portion 138 may be connected to a base 142 at an end of the third moving portion 138 opposite to the end connected to the second moving portion 136. The gripping system 100 may be stationary with the base 142 mounted to the floor. When the gripping system 100 is stationary, the gripping system 100 may retrieve hard drives from a predetermined location. In some aspects, a stationary gripping system may retrieve hard drives from a conveyor belt.

In other aspects, the gripping system 100 may be mobile. For example, the base 142 may be mounted to a mobile unit, such as an autonomous vehicle, robot, or other entity that moves by way of wheels, treads, legs, or any other structure capable of translational motion. When the gripping system 100 is mobile, the gripping system 100 may retrieve hard drives from multiple locations.

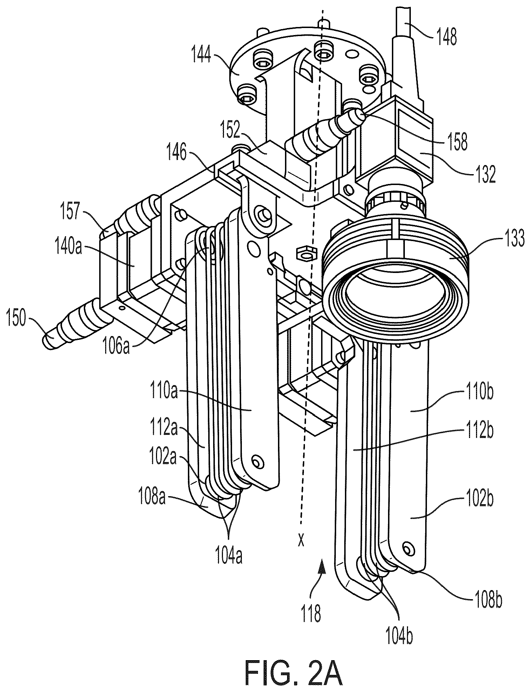

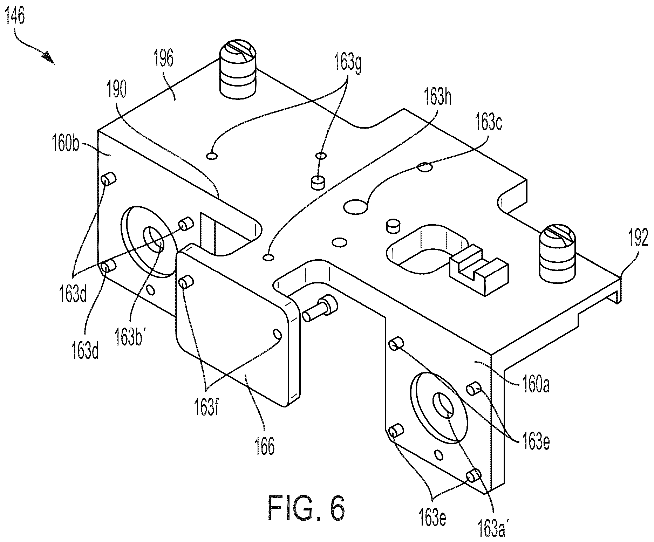

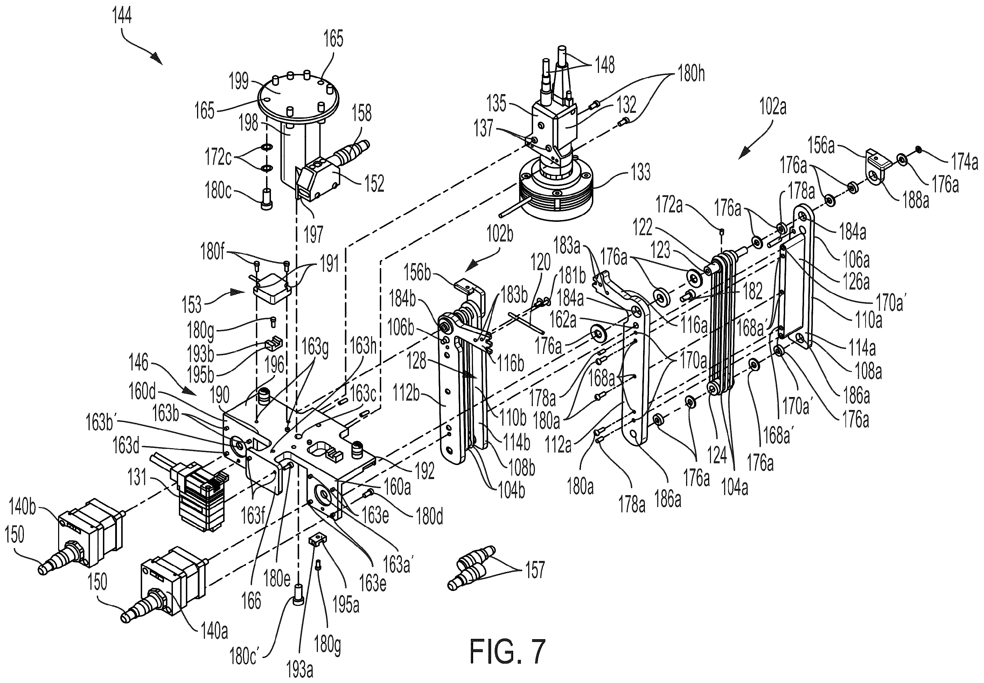

FIG. 2A illustrates a perspective view of a portion of the gripping system 100 in FIG. 1. The portion may be connected to the gripping system 100 through a connector 144, as described further in connection with FIG. 7. The components of the portion of the gripping system 100 may be connected through a main bracket 146, as described further in connection with FIG. 6. The components of the portion of the gripping system 100 connected to the main bracket 146 may include the connector 144, the camera 132, the first motor 140a, the second motor 140b, the first arm 102a, the second arm 102b, and the barcode scanner 131.

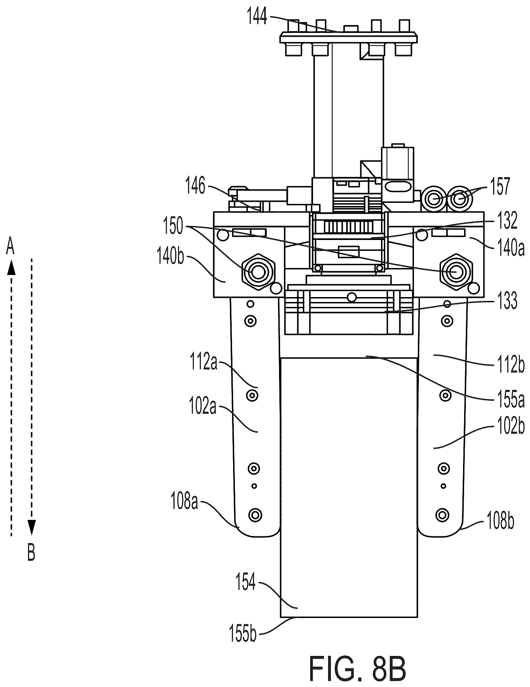

The two opposing arms 102a, 102b may be a first arm 102a and a second arm 102b elongated in a longitudinal direction and defining a receiving space 118 to receive a hard drive. The receiving space 118 may be a rectangular space between the arms 102a, 102b and along the length of the arms 102a, 102b. To secure a hard drive in the receiving space 118, the receiving space 118 may be sized slightly larger than a hard drive. For example, a distance between the first arm 102a and the second arm 102b may range from 85 mm to 110mm, and a length of the first arm 102a and the second arm 102b may range from 135 mm to 205 mm. The first arm 102a may include a first plurality of belts 104a, and the second arm 102b may include a second plurality of belts 104b. The belts 104a, 104b may translate the hard drive along a gripping axis X, as further described in connection with FIG. 8B.

The camera 132 may be positioned along gripping axis X to detect a hard drive along gripping axis X to be received by the gripping system 100. The camera 132 may include a light 133 to illuminate what the camera 132 is detecting. The light 133 may be, for example, a ring light, spotlight, light emitting diode, or any other types of light. The camera 132 may also include a camera cable port 148 to connect the camera 132 to a power source. The camera 132 may function as a machine vision localization to guide the gripping system 100 to a position and orientation for retrieving and releasing a hard drive. In some aspects, the camera 132 may also function to read a visual identifier on a hard drive, such as a barcode, which may include a manufacturer part number and a serial number specific to that hard drive. In other aspects, the camera 132 may be moveable about or along an axis to detect a hard drive within a larger detection space.

FIG. 2B illustrates a perspective view of the portion of the gripping system 100 in FIG. 2A. The first motor 140a, the second motor 140b, and the barcode scanner 131 may be connected to the same edge of the main bracket 146, as described in connection with FIG. 6.

The first motor 140a may engage with the first arm 102a to move the first belts 104a, and the second motor 140b may engage with the second arm 102b to move the second belts 104b, as described in further detail in connection to FIG. 7. The motors may be stepper motors. In other aspects, the motors may be a brushless DC motor or a brushed DC motor. Additionally, in other aspects, there may be any number of motors, such as a single motor to power both the arms 102a, 102b.

The barcode scanner 131 may function to scan a barcode, which may include a manufacturer part number and a serial number specific to that hard drive. In other aspects, the camera 132 may instead include a barcode scanner.

A first sensor 152 may be located on an end of the camera 132 opposite to the end connected to the light 133. The first sensor 152 may be a laser distance sensor, which may use an analog signal to measure a distance from the first sensor 152 to an end of the hard drive. Thus, the first sensor 152 may be used to determine if a hard drive is in the receiving space 118. Additionally, the first sensor 152 may be used to determine a position and orientation of a hard drive while moved by the belts 104a, 104b. If the first sensor 152 detects that a hard drive has slipped out of place, the motors 140a, 104b can be turned on to move belts 104a, 104b to pull the hard drive back in or to release the hard drive to be picked up again.

A second sensor 153 may be located on the main bracket 146. Second sensor 153 may be a Multi Physics Box (MPB) sensor, which may be used to monitor vibrations, shocks, and temperatures and/or to monitor conditions of the arms 102a, 102b during operation. Specifically, second sensor 153 may be used to record accelerations during movement of the system 100, detect collisions, detect vibrations due to wearing of components or unwanted behaviors within the system 100, and/or record the ambient temperature of the environment. Second sensor 153 may monitor such conditions based on whether measured values exceed predefined values for those conditions..

In other aspects, the gripping system 100 may include a discrete sensor. The discrete sensor may confirm whether a hard drive is fully engaged within the arms 102a, 102b. Additionally, the discrete sensors may detect a position of a hard drive if it is not fully engaged within the arms 102a, 102b, such as if a hard drive begins to eject from the grasp of arms 102a, 102b. For example, the discrete sensor may be a limit switch, a programmed photo eye, or a proximity switch. A limit switch may detect the presence of a hard drive through mechanical interaction between the hard drive and the limit switch. Thus, the limit switch may prevent the hard drive from moving past a predetermined point as a result of the mechanical interaction. A programmed photo eye may detect the presence of a hard drive or a distance of the hard drive from the sensor using light. A proximity switch may detect the proximity of a hard drive by a disturbance of an electromagnetic field, light, or sound.

In other aspects, the gripping system 100 may include a force torque sensor, which may be integrated with the gripping system 100 to determine when the gripper has contacted a hard drive. The force torque sensor may function to stop the gripping system 100 from damaging itself, the gripper, or a hard drive by causing the gripping system 100 to stop if an exerted force exceeds a predetermined threshold.

In other aspects, the gripping system 100 may include current monitoring on the at least one motor. The current monitoring may detect when a hard drive has reached an end stop, which may be a pin. When the hard drive touches the pin, an increase in friction and therefore an increase in current may provide a signal that the hard drive was fully drawn into the gripping system 100.

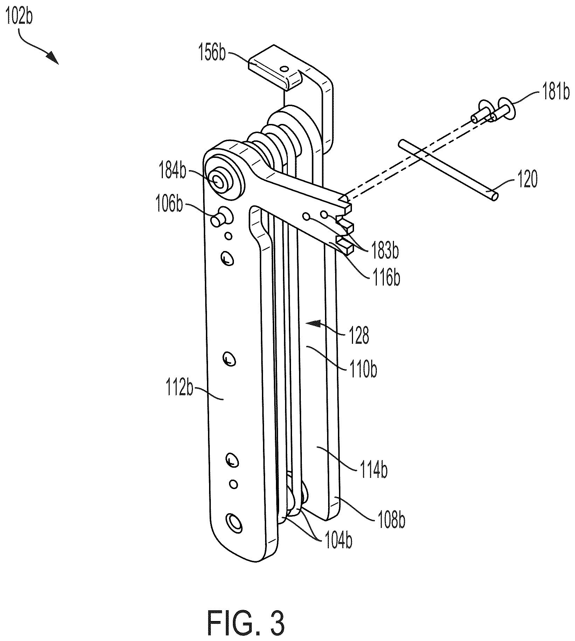

FIG. 2C illustrates a side view of the portion of the gripping system 100 in FIG. 2A. The first plurality of belts 104a and the second plurality of belts 104b may be electrostatic discharge belts to release static electricity to prevent damage to a hard drive. The first plurality of belts 104a and the second plurality of belts 104b may each include three continuous belts positioned around a drive pulley 122 and an idler pulley 124, as described in further detail in connection with FIGs. 3A and 3B. However, there may be any number of belts on each arm configured to translate a hard drive. For example, in other aspects, each arm may contain one belt. To engage a hard drive between the two arms 102a, 102b, the belts 104a, 104b may include a textured outer surface so that a hard drive does not slip out of place. The belts 104a, 104b may move in a receiving direction A toward the main bracket 146 to receive a hard drive. The belts 104a, 104b may also move in a releasing direction B away from the main bracket 146 to release a hard drive. The movements of the belts 104a, 104b may be facilitated by motors 140a, 140b that engage with the arms 102a, 102b, as described in further detail in connection with FIG. 7.

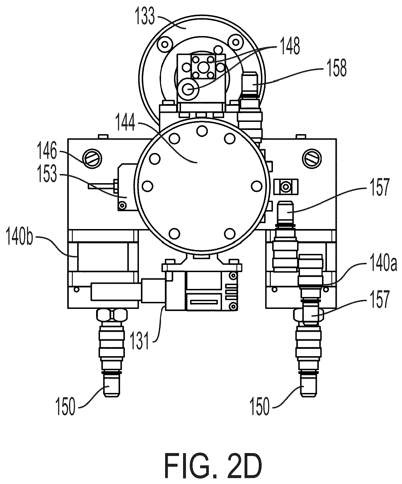

FIG. 2D illustrates a top view of the portion of the gripping system 100 in FIG. 2A. The gripping system 100 includes several cable ports to connect components to a power source. Specifically, two motor cable ports 150 may be located on each of the first motor 140a and the second motor 140b to power the motors 104a, 104b. A connector cable port 158 may be located on the connector 144 to power the sensor 152. Two camera cables ports 148 may be located on the camera 132 to power the camera 132. Two cable ports 157 may be located on the camera 132 and may power the second sensor 153 and light 133. Cables in cable ports 157 may be extension cables because the second sensor 153 and light 133 may each have short cables.

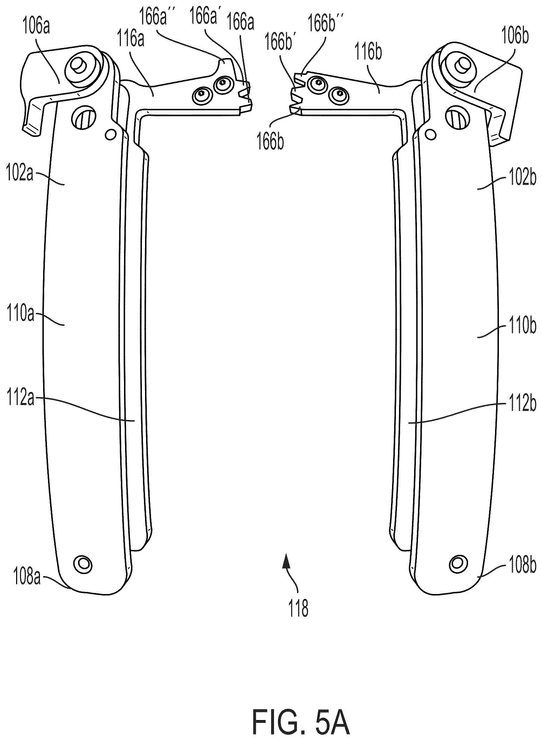

FIG. 3 illustrates the second arm 102b on the gripping system 100 of FIG. 1. The second arm 102b may be a mirrored version of the first arm 102a, aside from the teeth on an extension 116a, 116b of each arm 102a, 102b, as described in further detail in connection with FIG. 5A.

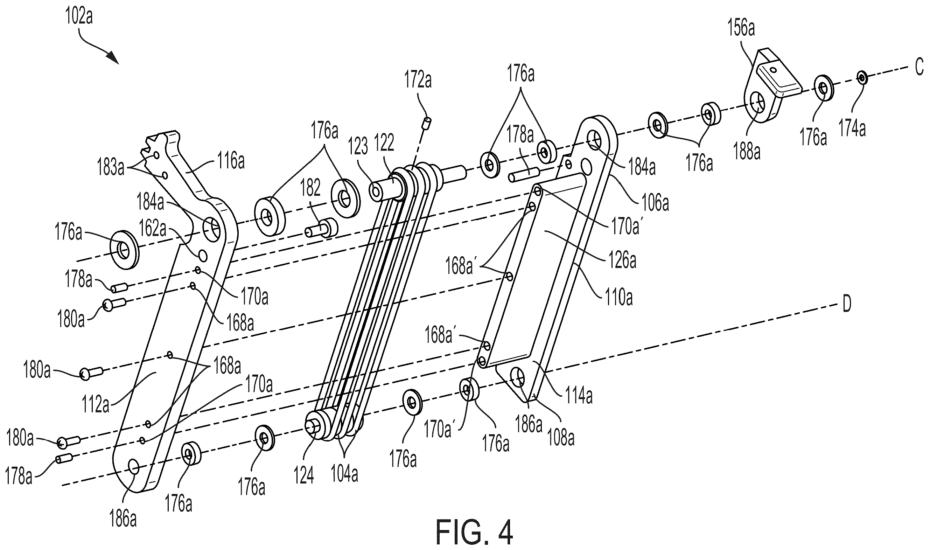

The second arm 102b may include a front portion 110b and a back portion 112b opposite to each other such that a front internal surface (not shown) of the front portion 110b faces a back internal surface 114b of the back portion 112b. The front portion 110b and the back portion 112b may be connected by a drive pulley 122 at the top end 106b and by an idler pulley 124 at the bottom end 108b, as described in further detail in connection to FIG. 4.

The back portion 112b may include an extension 116b on the top end 106b so that the back portion 112b is an L-shape. To engage a hard drive, the extensions 116a, 116b may include teeth that cooperate with each other, similar to a gear, when receiving or releasing a hard drive, as described in connection with FIG. 5A-5C.

As shown in FIGs. 5A-5C, the arms 102a, 102b may be coupled to each other by the top end 106a, 106b and may be free at the bottom end 108a, 108b. A passive spring mechanism may stabilize the arms 102a, 102b as they rotate to receive a hard drive. For example, the passive spring mechanism may be a leaf spring 120 positioned between the top ends 106a, 106b of the front portions 110a, 110b. The leaf spring 120 may be a thin and curved piece of metal that bends between when the arms 102a, 102b pivot outward to receive a hard drive. The leaf spring 120 may be connected to the second arm 102b through fasteners, such as one or more screws 181b, received in respective holes 183b in the extension 116b. However, the leaf spring 120 may be secured to the extension 116b through any type and any number of fasteners.

In other aspects, instead of arms 102a, 102b with a passive spring mechanism, the gripping system 100 may include fingers and actuators to move the fingers. The fingers may be curved at its free end so as to grip a hard drive. The actuators may move the fingers along a horizontal axis or through a pivotal connection.

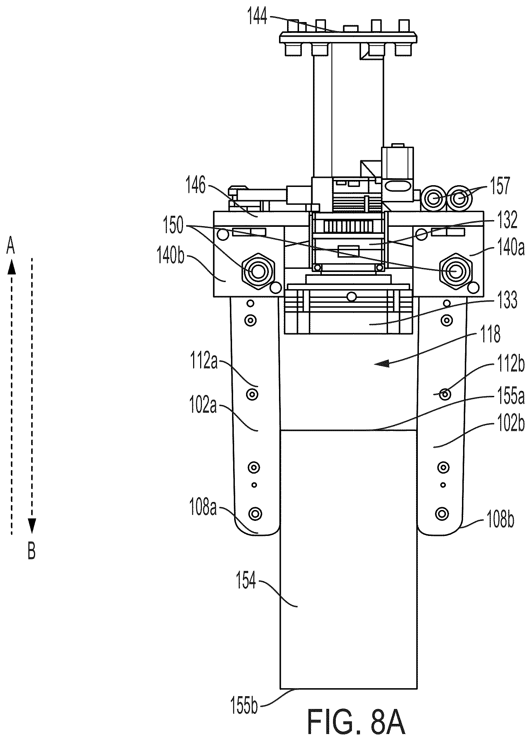

The drive pulley 122 and the idler pulley 124 may support the second plurality of belts 104b, which may be moved in the receiving direction A or in the releasing direction B, as described in further detail in connection with FIG. 8A. The arms 102a, 102b may define a channel 128 between the front internal surface (not shown) and the back internal surface 114a, 114b. A hard drive may be received in channels 128 between each of the arms 102a, 102b along the gripping axis X.

An arm bracket 156a may be connected to the back portion 112a, as described in further detail in connection to FIG. 4. The arm bracket 156a may be rotatable for replacing or servicing worn belts 104a, 104b. Specifically, the arm bracket 156a may rotate away from the main bracket 146 to create a passthrough for the belts 104a, 104b to be removed. The rotation may be about axis C, which may be along the length of the drive pulley 122, as best shown in FIG. 4. While the gripping system 100 is in operation, the arm bracket 156a may be held in place with a fastener to prevent axial rotation of the arm bracket 156a. The fastener may be a circlip, or a C-shaped flexible material with protrusions at its ends to be received in a groove on the main support bracket. The fastener may also be a thumbscrew on the main support bracket to thread into a hole on the arm bracket 156a. While the gripping system 100 is not in operation, the circlip may be removed and/or the thumbscrew may be unthreaded to allow the arm to rotate away from the main bracket 146.

FIG. 4 illustrates an exploded view of the first arm 102a in the gripping system 100 of FIG. 1. As stated in connection with FIG. 3, the first arm 102a may be a mirrored version of the second arm 102b, aside from the teeth on the extensions 160a, 160b. Therefore, like elements are referred to with similar numerals within the a-series of numbers for brevity.

The drive pulley 122 may be located along axis C. Also along axis C be may holes positioned to receive the drive pulley 122 on the front and back portions 110a, 112a and a hole on the arm bracket 156a. Specifically, the front portion 110a and the back portion 112a may each have a drive pulley hole 184a at the top end 106a to receive the drive pulley 122. Additionally, the arm bracket 156a may include an arm bracket hole 188a to connect to the drive pulley hole 184a of the front portion 110a. The drive pulley 122 and arm bracket 156a may be secured by a plurality of bearings 176a and a retaining ring 174a. The bearings 176a may function to bear friction. The retaining ring 174a may function to secure the front portion 110a, the back portion 112a, the drive pulley 122, and the arm bracket 156a in place. The plurality of bearings along axis C may include one bearing 176a between the first extension 160a and the main bracket 146, two bearings 176a between the back portion 112a and an end of the drive pulley 122 closest to the back portion 112a, two bearings 176a between the front portion 110a and an end of the drive pulley 122 closest to the front portion 110a, two bearings 176a between the front portion 110a and the arm bracket 156a, and one bearing between the arm bracket 156a and the retaining ring 174a.

The idler pulley 124 may be located along axis D. Also along axis D may include holes to receive the idler pulley 124 each on the front portion 110a and the back portion 112a. Specifically, the front portion 110a and the back portion 112b may each have a idler pulley hole 186a at the bottom end 108a to receive the idler pulley 124. The idler pulley 124 may be secured by a plurality of bearings 176a. The plurality of bearings 176a along axis D may be two bearings 176a between the back portion 112a and an end of the idler pulley 124 closest to the back portion 112a and two bearings 176a between the front portion 110a and an end of the idler pulley 124 closest to the front portion 110a.

The front portion 110a may include a belt protrusion 126a on the front internal surface (not shown). The belt protrusion 126a may be an oval shape and sized to be received within the first plurality of belts 104a. The belt protrusion 126a may include a plurality of screw holes 168a' and a plurality of pin holes 170a'. The plurality of screw holes 168a' may be three holes along a longitudinal axis. The plurality of pin holes 170a' may be three holes, one on either end of the plurality of screw holes 168a' and along the longitudinal axis, and one between the holes on the longitudinal axis and the drive pulley hole 184a. The back portion 112a may include a plurality of screw holes 168a and a plurality of pin holes 170a that align with the plurality of screw holes 168a' and plurality of pin holes 170a' on the belt protrusion 126a, respectively. A plurality of screws 180a may be inserted into the plurality of screw holes 168a', and a plurality of pins 178a may be inserted into the plurality of pin holes 170a, 170a' to secure the front portion 110a to the back portion 112a. However, the front portion 110a and the back portion 112a can be secured with any fastener. Further, the back portion 112a and the front portion 110a may have any number of holes to receive fasteners.

The back portion 112a may further include a shoulder bolt hole 162a. The shoulder bolt hole 162a may be located on the longitudinal axis and be positioned between the drive pulley hole 184a and the plurality of screw and pin holes 168a, 170a on the back portion 112a. A shoulder bolt 182 may be received in the shoulder bolt hole 162a. The shoulder bolt 182a may be a fastener with a smooth shank so as to enable rotation of the first plurality of belts 104a around the shoulder bolt 182a. Shoulder bolt 182a may be a mechanical means to limit the motion of each arm 102a, 102b and may be a secondary means of retaining the arm 102a, 102b while the belts 104a, 104b on that arm are being replaced.

A plurality of washers 172a may be positioned between each of the first plurality of belts 104a so as to space apart each belt 104a.

FIG. 5A illustrates a side view of the first arm 102a and the second arm 102b on the gripping system 100 of FIG. 1. In FIG. 5A, the arms 102a, 102b are not engaged so as to illustrate the engagement mechanism on the first extension 160a of the first arm 102a and the second extension 160b on the second arm 102b. The first extension 160a and the second extension 160b may each include three teeth for engagement with each other, similar to a gear. The teeth may ensure that the arms 102a, 102b move relative to each other and remain equidistant from the gripping axis X.

The first extension 160a may have a first tooth 166a and a second tooth 166a' positioned above the first tooth 166a. The first and second teeth may extend towards the second extension 160a. The first extension 160a may also have a third tooth 166a'' extending towards the main bracket 146. Thus, the first, second, and third teeth may define three recesses to receive the teeth of the second extension 160b. The second extension 160b may have a fourth tooth 166b, a fifth tooth 166b' positioned above the fourth tooth 166b, and a sixth tooth 166b" positioned above the fifth tooth 166b'. The fourth, fifth, and sixth teeth may extend toward the first extension 160a. The fourth tooth 166b of the second extension 160b may be received below the first tooth 166a of the first extension 160a, the fifth tooth 166b' of the second extension 160b may be received between the first and second teeth of the first extension 160a, and the sixth tooth 166b" of the second extension 160b may be received between the second and third teeth of the first extension 160a.

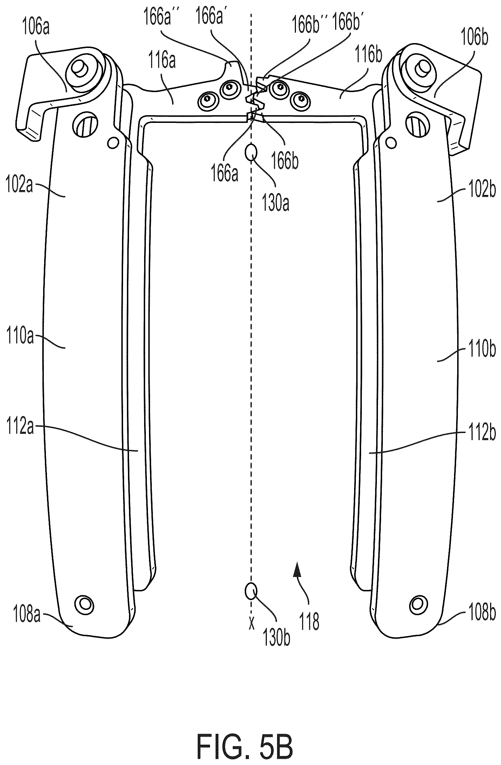

FIG. 5B illustrates the first arm 102a and the second arm 102b of FIG. 5A. The teeth on the arms 102a, 102b are engaged as described in connection with FIG. 5A. In FIG. 5B, the arms 102a, 102b are in a closed position, which may be a position in which the arms 102a, 102b are not receiving a hard drive. The bottom ends 108a, 108b of the arms 102a, 102b may be slightly closer to each other than the top ends 106a, 106b of the arms 102a, 102b. Specifically, when a top midpoint 130a is between the top ends 106a, 106b on the gripping axis X, and when a bottom midpoint 130b is between the bottoms ends on the gripping axis X, the top midpoint 130a may be farther from the top ends 106a, 106b than the bottom midpoint 130b is from the bottom ends 108a, 108b.

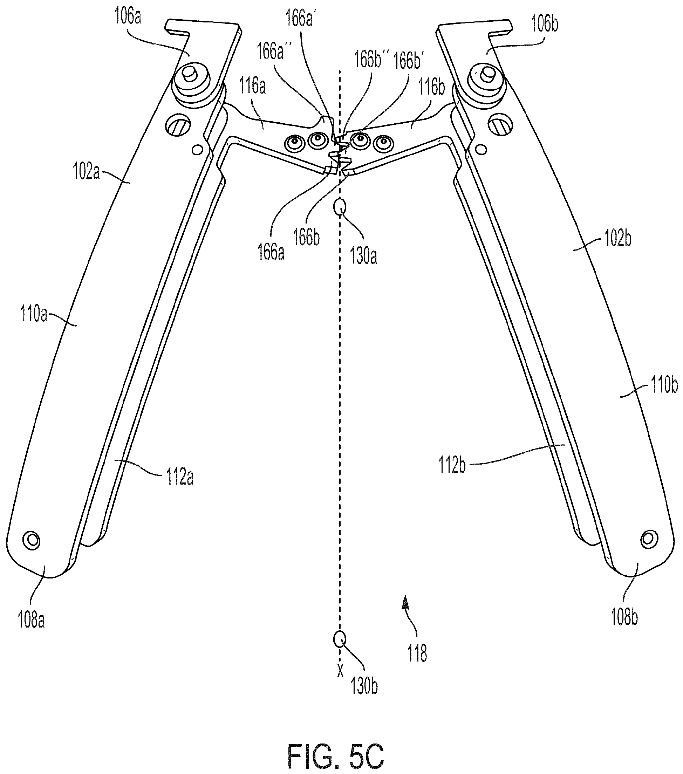

FIG. 5C illustrates the first arm 102a and the second arm 102b of FIG. 5A. The teeth on the arms 102a, 102b are engaged as described in connection with FIG. 5A. In FIG. 5C, the arms 102a, 102b are in an open position, which may be a position in which the arms 102a, 102b are receiving a hard drive. The bottom ends 108a, 108b of the arms 102a, 102b may be farther from each other than the top ends 106a, 106b of the arms 102a, 102b so that a distance between the bottom ends 108a, 108b is larger than a width of a hard drive. Specifically, the top midpoint 130a may be closer to the top ends 106a, 106b than the bottom midpoint 130b is from the bottom ends 108a, 108b.

As such, when the arms 102a, 102b engage with a hard drive, the bottom ends 108a, 108b of the arms 102a, 102b pivot away from each other, and the spring 120 may be placed in a bending moment, resulting in a force between the belts 104a, 104b to retain the hard drive. The force from the belts 104a, 104b also prevents drooping of a hard drive.

FIG. 6 illustrates the main bracket 146 on the gripping system 100 of FIG. 1. The main bracket 146 may be directly connected to the connector 144, the camera 132, the first motor 140a, the second motor 140b, and the barcode scanner 131. The main bracket 146 may be indirectly connected to the first arm 102a and the second arm 102b.

The main bracket 146 may include a main body 196 with a first edge 190 and a second edge 192 opposite the first edge 190. The main bracket 146 may also include a first extension 160a and a second extension 160b on either end of the first edge 190 and transverse to the main body 196. The first extension 160a and the second extension 160b may each have an internal surface (not shown) and an external surface. The main bracket 146 may also include a protrusion 166 positioned between the first extension 160a and the second extension 160b on the first edge 190 and have a surface transverse to the main body 196. The main body 196, the first extension 160a, the second extension 160b, and the protrusion 166 may each have a substantially flat surface for connection to components of the gripping system 100. The flat surfaces of the first extension 160a, second extension 160b, and protrusion 166 may be parallel to each other.

The main bracket 146 may have a plurality of holes to connect components to the main bracket 146 through fasteners. As described in further detail in connection with FIG. 7, the connector 144 and the second sensor 153 may each be connected to the main body 196, the camera 132 may be connected to the second edge 192, the first motor 140a may be connected to the external surface of first extension 160a, the second motor 140b may be connected to the external surface of the second extension 160b, the first arm 102a may be connected to the internal surface (not shown) of the first extension 160a, the second arm 102b may be connected to the internal surface (not shown) of the second extension 160b, and the barcode scanner 131 may be connected to the protrusion 166.

As such, the main bracket 146 may include a connector hole 163c and two second sensor holes 163g on the main body 196, two camera 132 holes (not shown) on the second edge 192, four first motor holes 163e and a first arm hole 163a' on first extension 160a, four second motor holes 163d (only three shown) and a second arm hole 163b' on second extension 160b, and two barcode scanner holes 163f on the protrusion 166. However, the main bracket 146 may include any number of holes corresponding to each component so as to secure each component. Additionally, in other aspects, the holes can be in any location on the main bracket 146.

FIG. 7 illustrates an exploded view of the portion of the gripping system 100 in FIG. 2A. The connector 144 may be connected to the main body 196 of the main bracket 146 on one end and to the first moving portion 134 on the opposing end. Thus, the connector 144 may function to connect the components connected to the main bracket 146 to the first moving portion 134. Specifically, the connector 144 may include a flat portion 199 with one or more holes 165 to each receive a screw 180c to be secured to the first moving portion 134. There may be eight holes. There may be two washers 172c between a head of the screw 180c and the flat portion 199. The flat portion 199 of the connector 144 may be circular. However, the flat portion may be any shape and may include any number of holes. Additionally, the flat portion can be connected to the first moving portion 134 with any type and any number of fasteners.

The connector 144 may also include a connector protrusion 198 extending from the flat portion 199. The connector protrusion 198 may include an extension 197 including a hole (not shown) opposite of the flat portion 199. The extension 197 may be received in the connector hole 163c in the main bracket 146. A screw 180c' may be inserted in the hole (not shown) of the connector protrusion 198 and in the connector hole 163c of the main body 196 of the main bracket 146 to secure the connector 144 to the main bracket 146. However, the connector 144 may include any number of holes that align with any number of holes in the main bracket 146, and the connector 144 and main bracket 146 may be connected with any type and any number of fasteners.

The camera 132 may be connected to the second edge 192 of the main bracket 146. A camera bracket 135 connected to the camera 132 may have one or more holes 137 aligning with the holes (not shown) in the second edge 192 of the main bracket 146. Screws 180h may be inserted in the respective holes 137 in the camera bracket 135 and the holes (not shown) of the second edge 192 to secure the camera 132 to the main bracket 146. However, the camera bracket 135 may include any number of holes that align with any number of holes in the main bracket 146, and the camera bracket 135 and main bracket 146 may be connected with any type and any number of fasteners.

The first motor 140a may be connected to the external surface of the first extension 160a of the main bracket 146, and the second motor 140b may be connected to the external surface of the second extension 160b of the main bracket 146. Each motor may include two holes (not shown) opposite of the motor cable ports 150. The holes (not shown) in the first motor 140a may align with four motor holes 163e in the main bracket 146, and the holes (not shown) in the second motor 140b may align with four motor holes 163d (only three shown) in the main bracket 146. Screws 180d may be inserted into each hole (not shown) in the motors 140a, 140b and each motor hole 163d, 163e to secure the motors 140a, 140b to the main bracket 146. However, the motors may include any number of holes that align with any number of holes in the main bracket 146, and the connector 144 and main bracket 146 may be connected with any type and any number of fasteners.

Each motor may also include a drive shaft to engage with the drive pulley 122. Each drive pulley 122 may include a blind hole 123 to receive one of the two drive shafts. The drive shaft and the drive pulley 122 may be coupled together by a fastener, such as a set screw (not shown).

The first arm 102a may be connected to the internal surface (not shown) of the first extension 160a of the main bracket 146, and the second arm 102b may be connected to the internal surface (not shown) of the second extension 160b of the main bracket 146. Specifically, the first drive pulley hole 184a of the first arm 102a may align with the first arm hole 163a' on the first extension 160a of the main bracket 146, and the second drive pulley hole 184b of the second arm 102b may align with the second arm hole 163b' on the second extension 160b of the main bracket 146. The drive shaft of each motor 140a, 104b may extend through each arm hole 163a', 163b' to engage with each drive pulley 122, 122.

The barcode scanner 131 may be connected to the protrusion 166 on the main bracket 146. The barcode scanner 131 may include two holes (not shown) aligning with the barcode scanner holes 163f in the main bracket 146. Two screws 180e (only one shown) may be inserted in the holes (not shown) of the barcode scanner 131 and in the barcode scanner holes 163f of the protrusion 166 of the main bracket 146 to secure the barcode scanner 131 to the main bracket 146. However, the barcode scanner 131 may include any number of holes that align with any number of holes in the main bracket 146, and the barcode scanner 131 and main bracket 146 may be connected with any type and any number of fasteners.

The second sensor 153 may be connected to the main body 196 of the main bracket 146. The second sensor 153 may include two holes 191 aligning with the second sensor holes 163g in the main bracket 146. Two screws 180f may be inserted in the holes 191 of the second sensor 153 and in the barcode scanner holes 163f of the main body 196 of the main bracket 146 to secure the second sensor 153 to the main bracket 146. However, the second sensor 153 may include any number of holes that align with any number of holes in the main bracket 146, and the second sensor 153 and main bracket 146 may be connected with any type and any number of fasteners.

The gripping system may also include two zip tie holders 195a, 195b. The zip tie holders 195a, 195b may secure cables for cable management. The first zip tie holder 195a may be connected to a bottom surface of the first extension 160a of the main bracket 146. The second zip tie holder 195b may be connected to the protrusion 166 on a surface in line with the main body 196 of the main bracket 146. Each zip tie holder 195a, 195b may each include one hole 193a, 193b. First hole 193a of the first zip tie holder 195a may align with the first zip tie hole (not shown) in the main bracket 146. Second hole 193b of the second zip tie holder 195b may align with the second zip tie hole 163h in the main bracket 146. Screws 180g may be inserted into each of the holes of the zip tie holders 193a, 193b and in the zip tie holes 163h (only one shown) of the main bracket 146 to secure the zip tie holders 193a, 193b to the main bracket 146. However, the zip tie holders 193a, 193b may include any number of holes that align with any number of holes in the main bracket 146, and the zip tie holders 193a, 193b and main bracket 146 may be connected with any type and any number of fasteners.

FIG. 8A illustrates the portion of the gripping system 100 in FIG. 2A initially engaging a hard drive 154. The initial engagement may occur when the arms 102a, 102b are in a receiving location and position able to engage the hard drive 154. To move to the receiving location and position, the first moving portion 134 may rotate the arms 102a, 102b about axis Y-1, the second moving portion 136 may rotate the arms 102a, 102b about axis Y-2, and third moving portion 138 may rotate the arms 102a, 102b about axis Y-3, as described in connection with FIG. 1. In aspects in which the gripping system 100 is a mobile robot, the gripping system 100 may also relocate towards the hard drive 154 prior to moving the arms 102a, 102b with the first, second, and/or third moving portions 138.

To engage the hard drive 154, the gripping system 100 may translate the arms 102a, 102b forward along the gripping axis until the arms 102a, 102b have engaged the hard drive 154. Once the arms 102a, 102b engage the hard drive 154, the arms 102a, 102b may pivot outward as the hard drive 154 enters the receiving space 118 so that a distance between the bottom ends 108a, 108b of the arms 102a, 102b increases compared to a relaxed state of the arms 102a, 102b. The distance between the bottom ends 108a, 108b may be slightly larger than a width of the hard drive 154. This pivotal assembly of the arms 102a, 102b along with the force exerted by the belts 104a, 104b may enable the arms 102a, 102b to engage hard drive 154s of varying widths.

FIG. 8B illustrates the portion of the gripping system 100 in FIG. 2A fully receiving a hard drive 154. Once the hard drive 154 is initially engaged, as shown in FIG. 8A, the gripping system 100 may translate the hard drive 154 along the gripping axis in the receiving direction A towards the top end 106a 106b of the arms 102a, 102b and towards the main bracket 146. To translate the hard drive 154 in the receiving direction A, the first plurality of belts 104a on the first arm 102a may move in a counterclockwise direction, and the second plurality of belts 104b on the second arm 102b may move in a clockwise direction. The belts 104a, 104b may stop moving once the hard drive 154 is fully received. The belts 104a, 104b may receive a signal to stop moving, such as from a sensor, as described in connection with FIG. 2B. In other aspects, a user may manually stop the motion of the belts 104a, 104b. The hard drive 154 may be fully received when a distance between a top edge 155a of the hard drive 154 and the bottom end 108a, 108b of the arms 102a, 102b is larger than a distance between a bottom edge 155b of the hard drive 154 and the bottom end 108a, 108b of the arms 102a, 102b.

Once the hard drive 154 is fully received, the gripping system 100 may release the hard drive 154 in an intended location, such as in packaging or in a machine. To access the intended location, the first moving portion 134 may rotate the arms 102a, 102b about axis Y-1, the second moving portion 136 may rotate the arms 102a, 102b about axis Y-2, and third moving portion 138 may rotate the arms 102a, 102b about axis Y-3, as described in connection with FIG. 1. In aspects in which the gripping system 100 is a mobile robot, the gripping system 100 may also relocate to the intended location.

To release the hard drive 154, the gripping system 100 may translate the hard drive 154 along the gripping axis in a releasing direction B away from the top end 106a 106b of the arms 102a, 102b and away from the main bracket 146. To translate the hard drive 154 in the releasing direction B, the first plurality of belts 104a on the first arm 102a may move in a clockwise direction, and the second plurality of belts 104b on the second arm 102b may move in a counterclockwise direction. The belts 104a, 104b may stop moving once the hard drive 154 is fully released from the receiving space 118. As with the translation in the receiving direction A, the belts 104a, 104b may receive a signal to stop moving, such as from a sensor or a user.

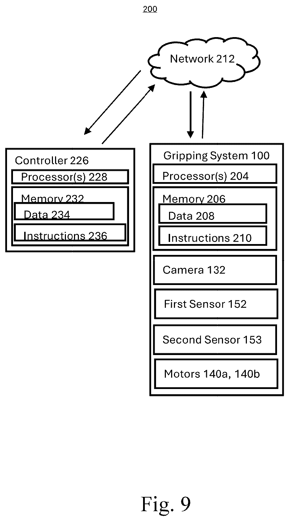

FIG. 9 is a block diagram of an example system 200 for an example method of receiving and releasing a hard drive. Specifically, FIG. 9 illustrates an example system 200 in which the features described above may be implemented. In this example, the system 200 may include a gripping system such as the gripping system 100, a hard drive such as the hard drive 154, and a network 212.

The gripping system 100 may receive and release a hard drive, as described in further detail in connection with FIGs. 8A-8B. The gripping system 100 may include one or more processors 204 and a memory 206. The memory 206 of the gripping system 100 includes data 208 and instructions 210. The data 208 may include a machine learning program or a visual system that can create a 3D visualization of a hard drive 154. The instructions 210 may be based on the position and orientation information of the hard drive 154 determined by the camera 132, the first sensor 152, and/or the second sensor 153, as described in detail in connection with FIG. 2A. The camera 132, the first sensor 152, and/or the second sensor 153 as well as the motors 140a, 140b may communicate with a higher-level controller, such as a programable logic controller (PLC) and/or computer, and/or robot controller. The motors 140a, 140b and sensors 152, 153 may, for example, be discrete, analog, serial, or ethernet protocol. To read values and command motion, the sensors 152, 153 may, for example, use IO-Link sensors. The camera 132 may, for example, be a GigE camera for vision-guided receiving and releasing of the hard drive 154.

The instructions 210 may also include an external database of coordinates of the first and second arm 102a, 102b of the gripping system 100. The instructions 210 may allow the gripping system 100 to navigate an area, such as a datacenter, to receive and release the hard drive 154. The data 208 may allow the gripping system 100 to identify which hard drive 154 needs to be received.

The camera 132, the first sensor, and motors all communicate with a higher level controller e.g., programmable logic controller (PLC) and/or computer, and/or robot controller. The motors and sensors can be discrete, analog, serial, ethernet or other communication protocol. The sensors 152, 153 and motors 104a, 104b may read values and command motion, such as though an IO link. The camera 132 may be used for vision guided picking and placing.

Memory 206 of the gripping system 100 may store information accessible by the one or more processors 204, including instructions 210 that can be executed by the one or more processors 204. Memory 206 can also include data 208 that can be retrieved, manipulated, or stored by the processor. The memory 206 can be of any non-transitory type capable of storing information accessible by the processor, such as a hard-drive, memory card, read-only memory ("ROM"), random access memory ("RAM"), optical disks, as well as other write-capable and read-only memories. Memory 206 may store information that is accessible by the processors 204, including instructions 210 that may be executed by processors 204, and data 208.

The instructions 210 can be any set of instructions to be executed directly, such as machine code, or indirectly, such as scripts, by the one or more processors. In that regard, the terms "instructions," "application," "steps," and "programs" can be used interchangeably herein. The instructions can be stored in object code format for direct processing by a processor, or in any other computing device language including scripts or collections of independent source code modules that are interpreted on demand or compiled in advance.

Data 208 may be retrieved, stored, or modified by the one or more processors 204 in accordance with the instructions 210. For instance, although the subject matter described herein is not limited by any particular data structure, the data can be stored in computer registers, in a relational database as a table having many different fields and records, or XML documents. The data can also be formatted in any computing device-readable format such as, but not limited to, binary values, ASCII, or Unicode. Moreover, the data can include any information sufficient to identify the relevant information, such as numbers, descriptive text, proprietary codes, pointers, references to data stored in other memories such as at other network locations, or information that is used by a function to calculate the relevant data.

The one or more processors 204 may include any conventional processor, such as a CPU or microprocessor. Alternatively, the processor can be a dedicated component such as an ASIC or other hardware-based processor. Although not necessary, the controller 226 may include computing devices that include specialized hardware components to perform specific computing functions faster or more efficiently.

Although FIG. 9 functionally illustrates the processor, memory, and other elements of the gripping system 100 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the gripping system 100. Accordingly, references to a processor or controller will be understood to include references to a collection of processors, servers, or memories that may or may not operate in parallel.

System 200 further includes the controller 226 utilized to provide data 234 and instructions 236 to the gripping system 100 through the network 212. The controller 226 may include a processor 228 and a memory 232. The memory 232 may include data 234 and instructions 236. The data 234 may include a database of relative coordinates of the first and second arm 102a, 102b on gripping system 100.

Processor 228, memory 232, data 234, and instructions 236 of the controller 226 can be structurally and functionally similar to above disclosed processors 204, memory 206, data 208, and instructions 210 of the gripping system 100.

The gripping system 100 may be intended for use by a respective user, and have all of the components normally used in connection with a computing device including one or more processors (e.g., a central processing unit (CPU)), memory (e.g., RAM and internal hard drives) storing data and instructions, an output, such as a display (e.g., a monitor having a screen, a touchscreen, a projector, a television, or other device such as a smart watch display that is operable to display information), and user input devices (e.g., a mouse, keyboard, touchscreen or microphone). The gripping system 100 may also include a camera 132 for recording video streams, speakers, a network interface device, and all the components used for connecting these elements to one another. The gripping system 100 may be capable of wirelessly exchanging or obtaining data over the network 212.

Although the gripping system 100 may include a full-sized computing device, it may alternatively include mobile computing devices capable of wirelessly exchanging data with a server over a network such as the Internet. By way of example only, gripping system 100 may include a mobile phone or a device such as a wireless-enabled PDA, a tablet PC, a netbook, a smart watch, a head-mounted computing system, or any other device that is capable of obtaining information via the Internet. As an example, gripping system 100 may receive user input from a user input device, such as a keyboard, a keypad, microphone, using visual signals with a camera, or a touch screen.

The gripping system 100 and the controller 226 can be at various nodes of a network 212 and capable of directly and indirectly communicating with other nodes of network 212. Although one gripping system 100 and one controller 226 is depicted in FIG. 9, it should be appreciated that a system can include one or more devices or servers, with each device or server being at a different node of network 212. The network 212 and intervening nodes described herein can be interconnected using various protocols and systems, such that the network can be part of the Internet, World Wide Web, specific intranets, wide area networks, or local networks. The network 212 can utilize standard communications protocols, such as WiFi, Bluetooth, 4G, 5G, or any other manner of transmission or protocol.

In one example, gripping system 100 may include one or more controllers, e.g., controllers 226 having one or more computing devices, e.g., a server farm, which is configured to exchange information with different devices of a network for the purpose of receiving, processing, and transmitting the data to and from other computing devices. For instance, the controller 226 may be a web server that is capable of communicating with the one or more robots, such as the gripping system 100, using the network 212. The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

In some examples, the term "configured" is used herein in connection with systems and computer program components. For a system of one or more computers to be configured to perform particular operations or actions means that the gripping system 100 has installed on IT software, firmware, hardware, or a combination thereof that cause the gripping system 100 to perform the operations or actions. For one or more computer programs to be configured to perform particular operations or actions means that the one or more programs include instructions that, when executed by one or more data processing apparatus, cause the apparatus to perform the operations or actions.

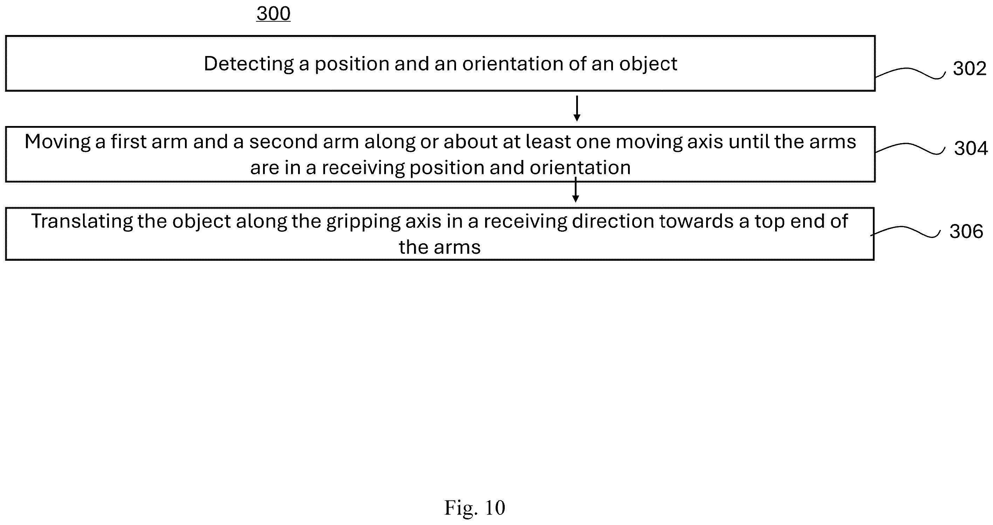

FIG. 10 is a flow diagram for an example method 300 of receiving and releasing a hard drive. As described herein with reference to FIGs. 1-9, a gripping system 100 may be used to receive and release hard drive 154. The following operations do not have to be performed in the precise order described below. Rather, various operations can be handled in a different order or simultaneously, and operations may be added or omitted.

In block 302, the gripping system 100 may detect a position and orientation of a hard drive. In some examples, the gripping system 100 may detect the position and orientation of the hard drive using a camera 132, a first sensor 152, and a second sensor 153. The camera 132 may function as a machine vision localization to guide the gripping system 100 to a position and orientation for retrieving and releasing a hard drive. In some aspects, the camera 132 may also function to read a visual identifier on a hard drive, such as a barcode, which may include a manufacturer part number and a serial number specific to that hard drive. The first sensor 152 may measure a distance between the first sensor 152 and an end of a hard drive, as discussed in connection with FIG. 2A. The second sensor 153 which may be used to monitor vibrations, shocks, and temperatures and/or to monitor conditions of the arms 102a, 102b during operation, as discussed in connection with FIG. 2A. In other aspects, the gripping system 100 may include one or more sensors described in connection with FIG. 2B.

In block 304, the gripping system 100 may move a first arm 102a and a second arm 102b along or about at least one moving axis until the arms 102a, 102b are in a receiving position and orientation able to engage the hard drive. The first moving portion 134 may rotate the arms 102a, 102b about axis Y-1, the second moving portion 136 may rotate the arms 102a, 102b about axis Y-2, and third moving portion 138 may rotate the arms 102a, 102b about axis Y-3, as described in connection with FIG. 1. In aspects in which the gripping system 100 is a mobile robot, the gripping system 100 may also relocate towards the hard drive prior to moving the arms 102a, 102b with the first, second, and/or third moving portions 138.

Once the arms 102a, 102b engage the hard drive, the arms 102a, 102b may pivot outward as the hard drive enters the receiving space 118 so that a distance between the bottom ends 108a, 108b of the arms 102a, 102b increases compared to a relaxed state of the arms 102a, 102b. The distance between the bottom ends 108a, 108b may be slightly larger than a width of the hard drive. This pivotal assembly of the arms 102a, 102b may enable the arms 102a, 102b to engage hard drives of varying widths.

In block 306, the gripping system 100 may translate the hard drive along the gripping axis in a receiving direction A towards the top end 106a, 106b of the arms 102a, 102b and towards the main bracket 146.

Once the hard drive is fully received, the gripping system 100 may release the hard drive in an intended location, such as in packaging or in a machine. To access the intended location, the first moving portion 134 may rotate the arms 102a, 102b about axis Y-1, the second moving portion 136 may rotate the arms 102a, 102b about axis Y-2, and third moving portion 138 may rotate the arms 102a, 102b about axis Y-3, as described in connection with FIG. 1. In aspects in which the gripping system 100 is a mobile robot, the gripping system 100 may also relocate to the intended location.

To release the hard drive, the gripping system 100 may detect a location to releasing the hard drive, which may be detected using the camera 132, the first sensor 152, and/or the second sensor 153. The location may be in packaging or in a machine. Once the location to release the hard drive is detected, the gripping system 100 may move the first arm 102a and the second arm 102b along or about at least one moving axis until the arms 102a, 102b are in a releasing position and orientation able to release the hard drive in that intended location. The arms 102a, 102b may be moved as described in connection with block 302.

Once the arms 102a, 102b are in the releasing position, the gripping system 100 may translate the hard drive 154 along the gripping axis X in a releasing direction B away from the top ends 106a, 106b of the arms 102a, 102b and away from the main bracket 146.

Aspects of this disclosure can be implemented in digital circuits, computer-readable storage media, as one or more computer programs, or a combination of one or more of the foregoing. The computer-readable storage media can be non-transitory, e.g., as one or more instructions executable by a cloud computing platform and stored on a tangible storage device.

In this specification the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

While operations shown in the drawings and recited in the claims are shown in a particular order, it is understood that the operations can be performed in different orders than shown, and that some operations can be omitted, performed more than once, and/or be performed in parallel with other operations. Further, the separation of different system components configured for performing different operations should not be understood as requiring the components to be separated. The components, modules, programs, and engines described can be integrated together as a single system or be part of multiple systems.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A gripping system comprising:
two arms opposing each other, each arm having a length elongated in a longitudinal direction and defining a receiving space to receive a hard drive, each arm having a top end and a bottom end such that a top midpoint between the top ends of the arms and a bottom midpoint between the bottom ends of the arms define a gripping axis, wherein each arm comprises a front portion and a back portion opposing each other such that a front internal surface of the front portion faces a back internal surface of the back portion and creating a channel between the front internal surface and the back internal surface, each channel configured to receive the hard drive between the arms along the gripping axis, wherein the two arms are coupled to each other by the top end and are free at the bottom end; and
at least one belt along a length of each arm and positioned between the front and back portions of each arm, each of the at least one belt between each front and back portion.

2. The gripping system of claim 1, wherein the arms are pivotally connected to a main bracket.

3. The gripping system of claim 2, further comprising a multi physics box sensor connected to the main bracket, the multi physics box sensor configured to measure a condition of the system and compare that measured condition to a predetermined value of that condition, the condition being at least one of a vibration, a shock, or a temperature, and/or
further comprising a spring between the top ends of the arms, the spring configured to bend when the arms pivot outward to receive a hard drive, wherein when the arms pivot outward, the top midpoint is closer to the top ends than the bottom midpoint is from the bottom ends.

4. The gripping system of claim 3, further comprising at least one moving portion connected to the main bracket, the at least one moving portion configured to move the arms along or about at least one moving axis.

5. The gripping system of claim 4, wherein the at least one moving portion is a first moving portion connected to the arms and pivotally connected to a second moving portion so that movement of the first moving portion relative to the second moving portion and about a first axis causes the arms to rotate about the first axis.

6. The gripping system of claim 5, wherein the second moving portion is pivotally connected to a third moving portion so that movement of the second moving portion relative to the third moving portion and about a second axis causes the arms to rotate about the second axis, the second axis being transverse to the first axis, and
wherein optionally the third moving portion is pivotally connected to a base of the system so that movement of the third moving portion relative to the base and about a third axis causes the arms to rotate about the third axis, the third axis being transverse to the first and second axes.

7. The gripping system of any one of claims 4 to 6, further comprising one or more processors configured to:
detect a position and orientation of the hard drive;
move, by one or more moving portions based on the position and orientation of the hard drive, the arms along or about the at least one moving axis until the arms are in a receiving position and orientation configured to receive the hard drive in the receiving space between the arms; and
translate, by the at least one belt on each arm, the hard drive along the gripping axis in a receiving direction towards the top end of the arms.

8. The gripping system of claim 7, further comprising a camera, wherein in detecting the position and orientation of the hard drive, the one or more processors are further configured to detect, by moving the camera along or about the at least one moving axis, the position and orientation of the hard drive, and
optionally further comprising a sensor positioned within the receiving space, the sensor configured to detect when the hard drive is fully engaged within the receiving space, wherein when the hard drive is fully engaged within the receiving space, a distance between a top edge of the hard drive and the bottom end of the arms is larger than a distance between a bottom edge of the hard drive and the bottom end of the arms.

9. The gripping system of claim 7 or 8, wherein the one or more processors is configured to translate, by the at least one belt on each arm, the hard drive along the gripping axis in a releasing direction towards the bottom end of the arms.

10. The gripping system of any one of claims 1 to 9, wherein the at least one belt is at least one O-ring.

11. The gripping system of any one of claims 1 to 10, further comprising a camera positioned along the gripping axis, the camera configured to detect the hard drive, and/or
further comprising a laser distance sensor within the receiving space, the laser distance sensor configured to measure a distance from the laser distance sensor to a top edge of the hard drive.

12. The gripping system of any one of claims 1 to 11, further comprising at least one motor, and
optionally further comprising a current monitoring sensor on the at least one motor, the current monitoring sensor configured to detect when the hard drive has reached an end stop.

13. The gripping system of claim 12, wherein the at least one motor is at least one of a stepper motor, a brushless DC motor, or a brushed DC motor.

14. A method of gripping a hard drive comprising:
detecting a position and orientation of a hard drive;
moving, by one or more moving portions based on the position and orientation of the hard drive, two opposing arms along or about at least one moving axis until the arms are in a receiving position and orientation configured to receive the hard drive in a receiving space between the arms; and
translate, by at least one belt along a length of each arm, the hard drive along a gripping axis in a receiving direction towards a top end of the arms, each of the at least one belt positioned traverse to two internal surfaces of each arm so as to define a channel on each arm for engaging the hard drive.

15. The method of claim 14, further comprising moving a camera along or about the moving axis to detect the position and orientation of the hard drive.
